# EUROPEAN PATENT APPLICATION

(11) **EP 3 919 023 A1**
(43) Date of publication of application: **08.12.2021**
(21) Application number: 20000030.5
(22) Date of filing: 20.01.2020
(51) Int. Cl.: A61C 13/00, A61C 5/77

(54) **SYSTEM FOR THE MANUFACTURE OF ARTIFICIAL TEETH**

(71) Applicant: Zucchini, Nicola, 44047 S.Agostino (Ferrara) (IT)
(72) Inventor: Zucchini, Nicola, 44047 S.Agostino (Ferrara) (IT)

(57) **Abstract**

The preassembled artificial teeth comprising at least a biocompatible material disc (1) with outside border (2) to hold the disc (1) into the milling machine and at least a reference joint (3) placed onto said outside border (2) to position the disc (1) housed and oriented inside the milling machine and reticular supports (4) for supporting the teeth (5). These artificial teeth (5) are full and single to realize mobile dental prostheses or empty and multiple to realize fixed prostheses or they can be modified with milling machines and dedicated software to modify them on the base of the necessities.

## Description

### Field of the invention.

The invention is in the field of the artificial teeth for dental prostheses, in particular in the dental technician field to realize both mobile than fixed prostheses with artificial teeth prearranged by milling machines with numeric control with traditional system.

### State of the art.

In the current art the teeth for the realization of mobile prostheses are sold to specialized firms in group of six or eight teeth in different color tonalities and different shapes. To realized a complete working inside a mouth are necessary a group of six and eight superior teeth and a group of six and eight inferior teeth. These firms produce teeth using two or three different color layers to reproduce the natural color of the teeth but they have a high cost. Said teeth are then fixed one by one onto an articulator by wax or resin before into a dental arch and then into the other in the positon considered more suitable to have a prostheses with artificial teeth drowned and held into structure custom arranged to the dental mechanic. These teeth, arranged with finishing workings with high costs, have the further disadvanges of a very long time of working. In the art are known the documents DE102012108217, EP3095538 and EP1974688 wherein devices are described to manufacture artificial teeth, but these devices do not provide the realization of artificial teeth with the technical working of mold and countermold.

### Summary of the invention.

The invented system permits to considerably reduce the production costs of the prosthesis, i.e. of the artificial teeth, with the use of discs supporting the printed teeth in more steps and to be modified with milling machine numerically controlled so to have custom teeth and easily removable from the disc. Aim of the present invention is to give to the dental mechanic a disc to be quickly worked by milling machine such as the material to be removed is very little and with a quality result very high. With the invented system is possible to realized teeth with cost very lower of which actually necessary such as it avoid all the micro-workings those currently need for a first roughing, for a finishing and for the preparation of group of teeth in six or eight units. The artificial teeth pre-mounted into preformed discs for the dental use comprises a disc in material suitable to the forming of teeth according to the current art with outside supported border to keep the disk in the milling, at least a reference joint placed into the outside border for housing into the milling machine and a reticular support to support the artificial teeth printed in more colors. The reference joints onto the border of the disc permits to the milling machine to have the perfect position of the teeth to mill them without errors, when is necessary a modification as requested to the dental mechanic. The discs can be arranged with molds of by 3D printers those use biocompatible materials. These and other aims and advantages of the present invention are better clear from the following detailed description of a preferred embodiment but not exclusive, with reference with the enclosed drawings where the invention is illustrated in a a merely indicative view and so not limiting.

### Brief description of the drawings.

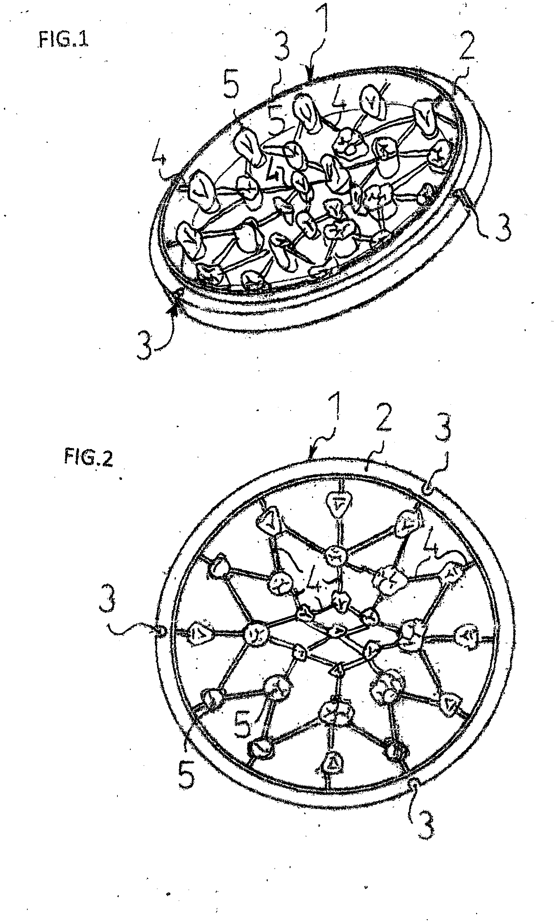

Figure 1 is perspective view of the invention, i.e. a disc to support the teeth to be worked if a different shape is requested or to be used as they are. Figure 2 is upper view of a disk according to the invention to be inserted into a numerically controlled milling machine.

### Detailed description.

The system for the manufacture of artificial teeth comprises at least a biocompatible material disc, almost always in acrylic resin, with an outsider border 2 to hold the disc 1 into the milling machine, at least a reference joint 3 placed into said outsider border 2 to put the disc 1 housed and oriented inside the milling machine and reticular supports 4 for supporting the teeth 5 wherein, by milling, can be changed said artificial teeth 5 onto the disc 1. The disc provides at its inside the lower and the upper artificial teeth complementary each other. The orienting of the disc by one or more reference joint 3 so permit the working of each artificial tooth in correct way. The position so obtained, in fact, permits to the milling machine to know where exactly are artificial teeth to be worked and eventually modified their shape. With the invented system so is possible to reproduce a mouth arcade in complete of partial form. The obtained artificial teeth then can be full or empty in their inside, to form mobile prostheses or caps or bridges between natural teeth. The reference joints 3 into the outsider border 2 of the disc 1 or similar systems permit to know the correct position of the artificial teeth to can fix them without error. The position onto the milling machine is then detected from the machine with different systems on the base of the kind of milling with feelers, scanning devices, optical readers or similar. The invented system so permits to have artificial teeth anatomically finishing so as printed or with the modifications of the dental mechanic for the forming of a dental arcade for a complete or partial mouth. The teeth 5 can be worked with numeric control milling machine. In other embodiment the teeth 5 and the disc 1 with outside border 2, at least a reference joint 3 and the supports 4 for the artificial teeth are arranged by 3D printer or for molding with mold and countermould or other suitable systems. The invented system is possible of a loto of modifications and changings all part of the described inventive object. All the particulars can be changed with other technically similar without exit form the protection field given to the claims.

## Claims

1. System for the manufacture of artificial teeth comprising a reticular support (4), **characterized in that** to comprise at least a biocompatible material disc (1) with outside border (2) to hold the disc (1) into the milling machine and at least a reference joint (3) placed onto said outside border (2) to position the disc (1) housed and oriented inside the milling machine and reticular supports (4) for supporting the teeth (5) wherein, by milling, the artificial teeth (5) can be modified onto the disc (1), with the artificial teeth (5), the disc (1) with outside border (2) with at least a reference joint (3) and the reticular support (4) for the artificial teeth (5) obtained by molding with mold-countermold of intraoral use material.

2. System for the manufacture of artificial teeth according to the previous claim, **characterized in that** the disc (1), the outside border (2), the reference joint (3), the reticular supports (4) and the artificial teeth (5) are made of intraoral use material.

3. System for the manufacture of artificial teeth, according to claims 1 and 2, **characterized in that** the artificial teeth (5) are finished, single and full inside to realize mobile dental prostheses.

4. System for the manufacture of artificial teeth, according to claims 1 and 2, **characterized in that** the artificial teeth (5) are finished, multiple and empty inside to realize caps or bridges or circulars to be applied onto the natural teeth to realize fixed dental prostheses.

5. System for the manufacture of artificial teeth, according to claims 1 and 2, **characterized in that** the artificial teeth (5), the disc (1) with outside border (2) with at least a reference joint (3) and the supports (4) of the artificial teeth (5) are finished and with intrusive or extrusive workings so to determine a joint for a quick positioning into support structures.

6. System for the manufacture of artificial teeth according to claims 1 and 2, **characterized in that** the artificial teeth (5), the disc (1) with outside border (2) with at least a reference joint (3) and the supports (4) of the artificial teeth (5) are obtained with a positional recognition system onto the milling machine for milling the artificial teeth (5) modifying them with precision.

7. System for the manufacture of artificial teeth, **characterized in that** the artificial teeth (5), the disc (1) with outside border (2) with at least a reference joint (3) and the supports (4) of the artificial teeth (5) are obtained by 3D printer with intraoral use material.

8. System for the manufacture of artificial teeth, **characterized in that** the artificial teeth (5), the disc (1) with outside border (2) with at least a reference joint (3) and the supports (4) are obtained with artificial teeth (5) single or multiple for bridges or circular bridges.
